Europäisches Patentamt

European Patent Office

Office européen des brevets

(11) Veröffentlichungsnummer: **0 293 004**
**A2**

## (12) EUROPÄISCHE PATENTANMELDUNG

(21) Anmeldenummer: 88108534.4

(51) Int. Cl.⁴: **G01S 15/04**

(22) Anmeldetag: 27.05.88

(30) Priorität: 29.05.87 DE 3718213

(43) Veröffentlichungstag der Anmeldung:
**30.11.88 Patentblatt 88/48**

(84) Benannte Vertragsstaaten:
**DE FR GB IT SE**

(71) Anmelder: **Erwin Sick GmbH Optik-Elektronik**
**Sebastian-Kneipp-Strasse 1**
**D-7808 Waldkirch(DE)**

(72) Erfinder: **Hippenmeyer, Heinrich**
**Wiesenstrasse 13**
**D-7831 Freiamt(DE)**
Erfinder: **Lauer, Reinhard**
**Unterfelderweg 5**
**D-7808 Waldkirch(DE)**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Ultraschall-Überwachungsvorrichtung.**

(57) Eine Ultraschall-Überwachungsvorrichtung für Räume weist wenigstens einen elektro-akustischen Sendewandler (11) und einen akusto-elektrischen Empfangswandler (12) auf. Der vom Sendewandler (11) ausgehende Sendeschallstrahl und der vom Empfangswandler (12) empfangene Reflexionsschallstrahl werden über eine drehbare Schallumlenkvorrichtung (13) in der Sendesollrichtung in den Raum bzw. aus der Empfangssollrichtung zum Empfangswandler (12) gelenkt.

FIG . 2

EP 0 293 004 A2

## Ultraschall-Überwachungsvorrichtung

Die Erfindung betrifft eine Schall-, insbesondere Ultraschall-Überwachungsvorrichtung für Räume mit wenigstens einem an einen Oszillator angeschlossenen elektro-akustischen Sendewandler zur Aussendung eines gebündelten Sendeschallstrahls und wenigstens einem von Objekten im Raum reflektierten Sendeschall empfangenden, eine gebündelte Empfangscharakteristik aufweisenden akusto-elektrischen Empfangswandler, der an einen elektrischen Empfänger angeschlossen ist, welcher ein von der Anordnung der Objekte im Raum abhängiges Überwachungssignal abgibt. Insbesondere wird erfindungsgemäß mit Ultraschall-Puls-Echo-Sensoren gearbeitet. Eine solche Anordnung findet beispielsweise bei der Überwachung eines Raumes zu Warnzwecken oder zur Rückraumsicherung bei Fahrzeugen Verwendung.

Bekannt sind weitwinklig arbeitende Sensoren oder fächerartige Anordnungen von schmalbandigen Sensoren. Weitwinklig arbeitende Sensoren sind gegenüber schmalwinkligen Wandlern benachteiligt wegen der geringen Reichweite und wegen des geringen Auflösungsvermögens. Schmalwinklige Sensoren bzw. Ultraschallwandler erfassen einen für viele Anwendungen zu kleinen Raumsektor. Die fächerartige Anordnung hat den Nachteil größeren Aufwands. Es werden nämlich mehrere Sensoren benötigt, die nur über eine Steuerschaltung ggfs. unter Verwendung eines Mikroprozessors betrieben werden können. Eine aufwendige Steuerschaltung ist z.B. deshalb erforderlich, weil bei gleichzeitigem Betrieb einer Sensorgruppe als Sender Interferenzerscheinungen auftreten können. Es bilden sich so mehrere scharfgerichtete Schallkeulen im Raum aus. Zwischen diesen Schallkeulen liegen die Nullstellen des Strahlungs-Richtdiagramms, d.h. tote Winkel, in denen die Schallechos von Objekten nicht erfaßt werden können.

Das Ziel der vorliegenden Erfindung besteht somit darin, eine Schall-, insbesondere Ultraschall-Überwachungsvor richtung der eingangs genannten Gattung zu schaffen, die bei verhältnismäßig einfacher Anordnung die genannten Nachteile nicht aufweist und mittels der sich die Vorteile der Peilschärfe und des hohen Auflösungsvermögens von Schmalwinkel-Wandlern für einen größeren Raumsektor nutzen lassen, der damit sicher und vollständig überwacht werden kann.

Zur Lösung dieser Aufgabe sieht die Erfindung vor, daß der vom Sendewandler ausgehende Sendeschallstrahl und der vom Empfangswandler empfangene Reflexionsschallstrahl über eine Schallumlenkvorrichtung in der Sendesollrichtung in den Raum bzw. aus der Empfangssollrichtung zum Empfangswandler gelenkt werden und daß die Schallumlenkvorrichtung um eine solche Achse eine ständige Abtastdrehbewegung ausführt, daß die Relation zwischen Sendesollrichtung und Empfangssollrichtung gleich bleibt.

Erfindungsgemäß werden also die Schallwandler (Puls-Echo-Sensoren) mit einer Schallumlenkvorrichtung zur gezielten Beeinflussung der Ausbreitungsrichtung gebündelter Schallstrahlen kombiniert. Durch die Kombi nation von mindestens einem schmalwinkligen Schallsensor bzw. -wandler mit einer Schallumlenkvorrichtung kann ein Raumsektor mit einer bestimmten Geometrie mittels Schallimpulsen ausgetastet werden. Insbesondere ist die Schallumlenkvorrichtung ein bezüglich des Umwandelns von elektrischer in akustische Energie und umgekehrt passives Element. Die Antriebselemente für die Umlenkvorrichtung sind vorzugsweise Schrittmotoren. Insbesondere können durch eine Zweifachablenkung mit zwei Sensoren vorzugsweise Referenzsignale zur Selbstüberwachung gebildet werden.

Eine praktische Ausführungsform kennzeichnet sich dadurch, daß die Schallumlenkvorrichtung eine Schallumlenkfläche für den Sende- und den Empfangsstrahl aufweist, die um eine gemeinsame Achse verdrehbar sind.

Insbesondere soll die Anordnung dabei so sein, daß die gemeinsame Drehachse mit der Hauptsende- und Empfangsachse des Sendewandlers und des Empfangswandlers ausgerichtet ist.

Eine einfache Verwirklichung der Schallumlenkung besteht nach einem weiteren Ausführungsbeispiel darin, daß die Schallumlenkvorrichtung durch einen Elektromotor zu einer Drehbewegung antreibbar ist. Um bei jeder Drehstellung eine gewisse Auswertezeit zur Verfügung zu haben, ist nach einer weiteren Ausführungsform der Elektromotor ein Schrittschaltmotor.

Um eine eindeutige Zuordnung der Ausgangssignale des Empfängers zu der momentanen Stellung der Schallumlenkvorrichtung zu erhalten, ist zweckmäßigerweise weiter vorgesehen, daß der Empfänger auch die momentane Drehstellung der Schallumlenkvorrichtung feststellt und ein der momentanen Drehstellung zugeordnetes Überwachungssignal liefert.

Mit einem einzigen kombinierten Sende-Empfangs-Wandler kann gearbeitet werden, indem der Sende- und Empfangswandler in einem abwechselnd als Sendewandler und Empfangswandler arbeitenden elektro-akustischen Wandler zusammengefaßt sind und die Schallumlenkvorrichtung aus lediglich einer einzigen ebenen Schallumlenkfläche besteht.

Es können aber auch getrennte Sende- und Empfangswandler verwendet werden, indem auf einer gemeinsamen Achse einander gegenüberliegende Sende- und Empfangswandler vorgesehen sind, die mit jeweils einer eigenen Schallumlenkfläche an der Schallumlenkvorrichtung zusammenwirken.

Bevorzugt ist die geometrische Anordnung der Schallumlenkung so, daß die Schallumlenkvorrichtung die auftreffenden Schallstrahlen um im wesentlichen 90° ablenkt.

Die Ausführungsform nach Anspruch 11 gewährleistet, daß auch senkrecht zur Abtastebene ein größerer Raumbereich von den Schallstrahlen erfaßt wird.

Die Erfindung wird im folgenden beispielsweise anhand der Zeichnung beschrieben; in dieser zeigt:

Fig. 1 eine schematische, blockschaltbildartige Seitenansicht einer ersten Ausführungsform einer erfindungsgemäßen Ultraschallüberwachungsvorrichtung und

Fig. 2 eine ähnliche Seitenansicht eine mit getrenntem Sende- und Empfangswandler arbeitenden Ausführungsform.

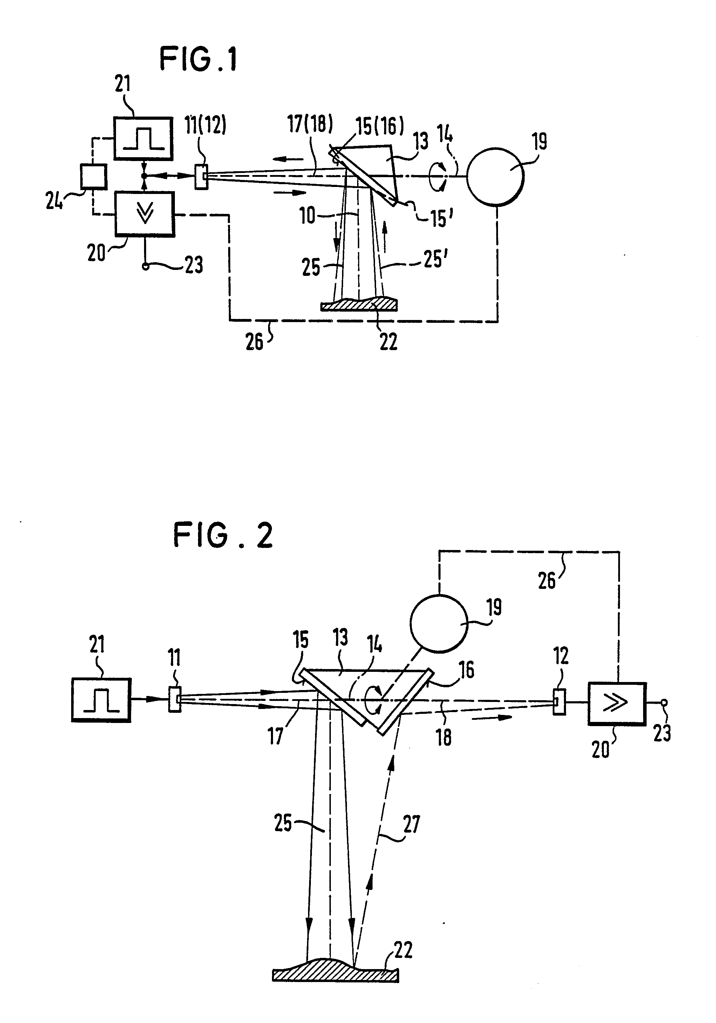

Nach Fig. 1 wird ein Puls-Echo-Wandler 11 (12) in Form eines Ultraschalltasters verwendet. Solche Ultraschalltaster werden z.B. als Näherungssensoren und Refelexschalter verwendet. Der Wandler 11 (12) erfüllt sowohl die Funktion eines Sende- als auch eines Empfangswandlers. Der Wandler arbeitet bevorzugt nach dem Echolaufzeitverfahren (Echolotprinzip).

Der elektro-akustische Wandler 11 (12) wird von einem Oszillator 21 mit elektrischen Impulsen gespeist, wodurch der Wandler 11 (12) Schallimpulse entlang einer Hauptsendeachse 17 zu einer Schallumlenkvorrichtung 13 sendet, die an der dem Wandler 11 (12) gegenüberliegenden Seite eine ebene Schallumlenkfläche 15 (16) aufweist, mittels der der auftreffende Schallstrahl um 90° zu einem darunterliegenden Objekt 22 umgelenkt wird. Das Objekt reflektiert den auftreffenden Schall mehr oder weniger zurück zur Schallumlenkfläche 15 (16), welche die reflektierten Schallstrahlen erneut um 90° auf die mit der Hauptsenderachse 17 zusammenfallende Hauptempfangsachse 18 umlenkt. Die reflektierten Schallstrahlen treffen so wieder auf dem Wandler 11 (12) auf. Die dadurch am Ausgang des Wandlers entstehenden elektrischen Signale werden von einem elektrischen Empfänger 20 empfangen, der an seinem Ausgang 23 ein entsprechendes elektrisches Signal abgibt. Eine Synchronisierungsanordnung 24 sorgt dafür, daß abwechselnd der Oszillator 21 einen Schallimpuls abgibt und in den Zeiten zwischen den Sendeimpulsen der Empfänger 20 zum Empfang der reflektierten Schallimpulsen scharf gemacht wird.

Die Schallumlenkvorrichtung 13 ist um eine mit der Hauptsendeachse 17 bzw. der Hauptempfangsachse 18 ausgerichtete Drehachse 14 von einem Elektromotor 19 zu einer kontinuierlichen Drehbewegung antreibbar. Hierdurch führt das von der Schallumlenkvorrichtung 13 zum Objekt 22 reflektierte Schallbündel eine kreisförmige bzw. sektorförmige Abtastbewegung um die Achse 14 aus. Entsprechend wird auch nur aus den betreffenden Richtungen reflektierte Schallenergie empfangen und zum Wandler 11 (12) geleitet. Das reflektierte Bündel 25 führt somit eine Abtastbewegung um die Achse 14 in einer senkrecht auf der Zeichnungsebene stehende Abtastebene 10 aus.

Der Motor 19 ist durch eine Synchronisierungsleitung 26 mit dem Empfänger 20 gekuppelt, so daß die vom Empfänger 20 aufgenommenen Empfangssignale der momentanen Drehstellung der Schallumlenkvorrichtung 13 zugeordnet werden können.

Gestrichelt angedeutet in Fig. 1 ist eine konvexe Ausbildung der Schallumlenkfläche 15', die ein senkrecht zur Abtastebene 10 aufgefächertes reflektiertes Bündel 25' schafft, wodurch ein größerer Raumbereich erfaßt wird.

Nach Fig. 2 ist der Oszillator 21 an einen Sendewandler 11 angeschlossen, welcher lediglich die Funktion eines Schallsenders ausübt. An der um die Achse 14 drehbaren Schallumlenkvorrichtung 13 ist eine nur für das Sendebündel vorgesehene Schallumlenkfläche 15 vorgesehen, die das reflektierte Bündel 25 zum Objekt 22 lenkt. Das reflektierte Bündel 25 definiert die Sendesollrichtung. Durch die gestrichelte Linie 27 ist die Empfangssollrichtung definiert; in dieser Richtung reflektierte Schallstrahlen treffen nach Reflexion an der Empfangsumlenkfläche 16 auf dem Empfangswandler 12 auf, der mit dem Sendewandler 11 und der Drehachse 14 der Schallumlenkvorrichtung 13 auf einer Linie liegt. Der Empfänger 20 gibt wieder ein dem empfangenen Schallsignal entsprechendes elektrisches Signal ab. Der Motor 19 ist durch die Synchronisationsleitung 26 mit dem Empfänger 20 verbunden, um eine eindeutige Zuordnung der in einem bestimmten Augenblick empfangenen Schallsignale zur momentanen Drehstellung der Schallumlenkvorrichtung 13 zu erhalten.

Der Erfindungsgedanke ist also darin zu sehen, daß durch die Schallumlenkvorrichtung 13 Sende- und Empfangsstrahlen in gleicher Weise den zu überwachenden Raum innerhalb eines Sektors oder eines Vollkreises ständig abtasten.

## Ansprüche

1. Schall-, insbesondere Ultraschall-Überwachungsvorrichtung für Räume mit wenigstens einem an einen Oszillator angeschlossenen elektro-akustischen Sendewandler zur Aussendung eines gebündelten Sendeschallstrahls und wenigstens einem von Objekten im Raum reflektierten Sendeschall empfangenden, eine gebündelte Empfangscharakteristik aufweisenden akusto-elektrischen Empfangswandler, der an einen elektrischen Empfänger angeschlossen ist, welcher ein von der Anordnung der Objekte im Raum abhängiges Überwachungssignal abgibt, dadurch **gekennzeichnet,** daß der vom Sendewandler (11) ausgehende Sendeschallstrahl und der vom Empfangswandler (12) empfangene Reflexionsschallstrahl über eine Schallumlenkvorrichtung (13) in der Sendesollrichtung in den Raum bzw. aus der Empfangssollrichtung zum Empfangswandler (12) gelenkt werden und daß die Schallumlenkvorrichtung (13) um eine solche Achse (14) eine ständige Abtastdrehbewegung ausführt, daß die Relation zwischen Sendesollrichtung und Empfangssollrichtung gleich bleibt.

2. Vorrichtung nach Anspruch 1, dadurch **gekennzeichnet,** daß die Schallumlenkvorrichtung (13) eine Schallumlenkfläche (15, 16) für den Sende-und den Empfangsstrahl aufweist, die um eine gemeinsame Achse (14) verdrehbar sind.

3. Vorrichtung nach Anspruch 2, dadurch **gekennzeichnet,** daß die gemeinsame Drehachse (14) mit der Hauptsende- und Empfangsachse (17, 18) des Sendewandlers (11) und des Empfangswandlers (12) ausgerichtet ist.

4. Vorrichtung nach Anspruch 2 oder 3, dadurch **gekennzeichnet,** daß die Schallumlenkvorrichtung durch einen Elektromotor (19) zu einer Drehbewegung antreibbar ist, wobei vorzugsweise der Elektromotor ein Schrittschaltmotor (19) ist, und/oder daß der Empfänger (20) auch die momentane Drehstellung der Schallumlenkvorrichtung feststellt und ein der momentanen Drehstellung zugeordnetes Überwachungssignal liefert.

5. Vorrichtung nach einem der vorhergehenden Ansprüche, dadurch **gekennzeichnet,** daß der Sende- und Empfangswandler in einem abwechselnd als Sendewandler und Empfangswandler arbeitenden elektroakustischen Wandler zusammengefaßt sind und die Schallumlenkvorrichtung (13) aus lediglich einer einzigen ebenen Schallumlenkfläche besteht.

6. Vorrichtung nach einem der Ansprüche 1 bis 4, dadurch **gekennzeichnet,** daß auf einer gemeinsamen Achse einander gegenüberliegende Sendeund Empfangswandler (11, 12) vorgesehen sind, die mit jeweils einer eigenen Schallumlenkfläche (15 bzw. 16) an der Schallumlenkvorrichtung (13) zusammenwirken.

7. Vorrichtung nach einem der vorhergehenden Ansprüche, dadurch **gekennzeichnet,** daß die Schallumlenkvorrichtung (13) die auftreffenden Schallstrahlen um im wesentlichen 90° ablenkt.

8. Vorrichtung nach einem der vorhergehenden Ansprüche, dadurch **gekennzeichnet,** daß die Schallumlenkfläche (15) eben ist.

9. Vorrichtung nach einem der Ansprüche 1 bis 7, dadurch **gekennzeichnet,** daß die Schallumlenkfläche (15') konvex gekrümmt ist, und zwar vorzugsweise um eine senkrecht auf der durch die Einfalls- und Austrittsbündel (17, 18; 25) definierten Ebene stehende Achse.

10. Vorrichtung nach einem der vorhergehenden Ansprüche, dadurch **gekennzeichnet,** daß die Schallumlenkfläche (15) um 45° zur Einfallsrichtung (17) geneigt ist, d.h., daß das Ausgangsbündel (25) einen Winkel von etwa 90° mit der Einfallsrichtung einschließt.

FIG.1

FIG.2